# EUROPEAN PATENT APPLICATION

(11) **EP 4 797 395 A1**
(43) Date of publication of application: **26.08.2026**
(21) Application number: 25730553.2
(22) Date of filing: 25.01.2025
(51) Int. Cl.: H01M 50/109, H01M 50/153, H01M 10/058, H01M 50/188

(54) **BUTTON CELL**

(30) Priority: 31.12.2024 CN 202411997502; 31.12.2024 CN 202423319580 U
(71) Applicant: Eve Energy Co., Ltd., Huizhou, Guangdong 516006 (CN)
(72) Inventor: RONG, Mengke, Huizhou, Guangdong 516006 (CN); ZHANG, Hong, Huizhou, Guangdong 516006 (CN); TAN, Yaning, Huizhou, Guangdong 516006 (CN); SUN, Peiling, Huizhou, Guangdong 516006 (CN); CAO, Lang, Huizhou, Guangdong 516006 (CN)
(74) Representative: Berggren Oy
(86) International application number: PCT/CN2025/075044
(87) International publication number: WO 2026/143802

(57) **Abstract**

A button battery is provided in the application, and includes a positive electrode case, a negative electrode case and a sealing sleeve. The positive electrode case includes a support portion and a corner portion connected to an outer side of the support portion. The corner portion includes a first turning segment having a first curvature radius R1 and a second turning segment having a second curvature radius R2. The second turning segment is connected between the support portion and the first turning segment. The negative electrode case includes a covering portion and a bending snap-engage portion having a third curvature radius R3. The covering portion and the support portion are disposed oppositely. The sealing sleeve is sandwiched between the corner portion and the bending snap-engage portion, so as to enable sealing between the positive electrode case and the negative electrode case.

## Description

This application claims priority to Chinese Patent Application No. 2024233195809, filed on December 31, 2024, and Chinese Patent Application No. 2024119975026, filed on December 31, 2024, the disclosures of which are incorporated herein by reference in their entirety.

### TECHNICAL FIELD

The present application relates to the technical field of batteries, and more particularly, to a button battery.

### BACKGROUND

The button battery is widely used as a power source in various miniature electronic products due to its light weight and small size. For example, the button battery is widely used in the fields of intelligent cameras, digital cameras, and dashcams. The button battery mainly includes a positive electrode case, a negative electrode cover, and a battery cell and an electrolyte in a sealed cavity formed between the positive electrode case and the negative electrode cover. The positive electrode, the separator and the negative electrode are sequentially stacked and folded to form the battery cell.

When the battery is used as a memory power source in a scene such as an intelligent camera or a dashcam, a special packaging process such as reflow soldering is required. In reflow soldering process, the battery is subjected to a high temperature process of 200°C or more (the maximum temperature is 260°C). However, a conventional lithium battery cannot withstand a temperature of 200°C or more, and the internal electrolyte decomposes to generate the gas in the high temperature environment.

### SUMMARY

### TECHNICAL PROBLEM

After the batteries undergo the reflow soldering process, the portion between the positive electrode case and the negative electrode cover in the related art is easily deformed by the gas expansion due to poor sealing, thereby resulting in liquid leakage during later usage.

### TECHNICAL SOLUTION

The present application provides a button battery including:
a positive electrode case including a support portion and a corner portion connected to an outer side of the support portion, in which the corner portion includes a first turning segment and a second turning segment, the second turning segment is connected between the support portion and the first turning segment, a first curvature radius R1 of the first turning segment ranges from 0.5mm to 0.85mm, and a second curvature radius R2 of the second turning segment ranges from 0.1mm to 0.5mm;
a negative electrode case comprising a covering portion and a bending snap-engage portion, wherein the covering portion and the support portion are disposed oppositely, the bending snap-engage portion have a third curvature radius R3 ranging from 0.1mm to 0.3mm, and the first turning segment and a region of the bending snap-engage portion having the third curvature radius R3 are disposed opposite each other; and
a sealing sleeve sandwiched between the corner portion and the bending snap-engage portion, so as to enable sealing between the positive electrode case and the negative electrode case.

### BENEFICIAL EFFECT

The first curvature radius R1 of first turning segment, and the second curvature radius R2 of the second turning segment of the positive electrode case are set to range from 0.5mm to 0.85mm and from 0.1mm to 0.5mm, respectively. The third curvature radius R3 of the bending snap-engage portion of the negative electrode case which is matched with the first turning segment is set to range from 0.1mm to 0.3mm. The corner portion and the bending snap-engage portion are sealed by the sealing sleeve. In this way, after the assembling of the button battery, the bending snap-engage portion of the negative electrode case can be matched with the pressing forces of both the first turning segment and the second turning segment, respectively; and the sealing sleeve is pressed between the bending snap-engage portion and the first turning segment, and between the bending snap-engage portion and the second turning segment, thereby ensuring the sealability of the button battery when the button battery is subjected to a high temperature at a later stage.

### BRIEF DESCRIPTION OF THE DRAWINGS

FIG. 1 is a first structural schematic view of a button battery according to embodiments of the present application;
FIG. 2 is a second structural schematic view of the button battery of FIG. 1; and
FIG. 3 is a partially enlarged schematic view of the button battery of FIG. 1.

Reference signs: 100-button battery, 10-positive electrode case, 11-support portion, 12-corner portion, 121-first turning segment, 122-second turning segment, 13-placement groove, 20-negative electrode case, 21-covering portion, 22-bending snap-engage portion, 221-third turning segment, 222-fourth turning segment, 223-fifth turning segment, 23-first corner portion, 24-second corner portion, 30-sealing sleeve, 31-clamping groove, 40-negative electrode current collector, 50-negative electrode, 60-separator, 61-bending segment, 70-positive electrode, 80-positive electrode current collector, and 90-negative electrode conductive layer.

### DETAILED DESCRIPTION

In the description of the present application, it is to be noted that the orientation or positional relationship indicated by the terms "upper," "lower," "front," "rear," "left," "right," "vertical," "horizontal," "top," "bottom," "inner," "outer," and the like is based on the orientation or positional relationship shown in the accompanying drawings, which merely facilitates the description of the present application and to simplify the description, and not indicates or implies that the indicated device or element must have a particular orientation, and must be constructed and operated in a particular orientation. Therefore, it is not to be construed as limiting the application.

### Example 1

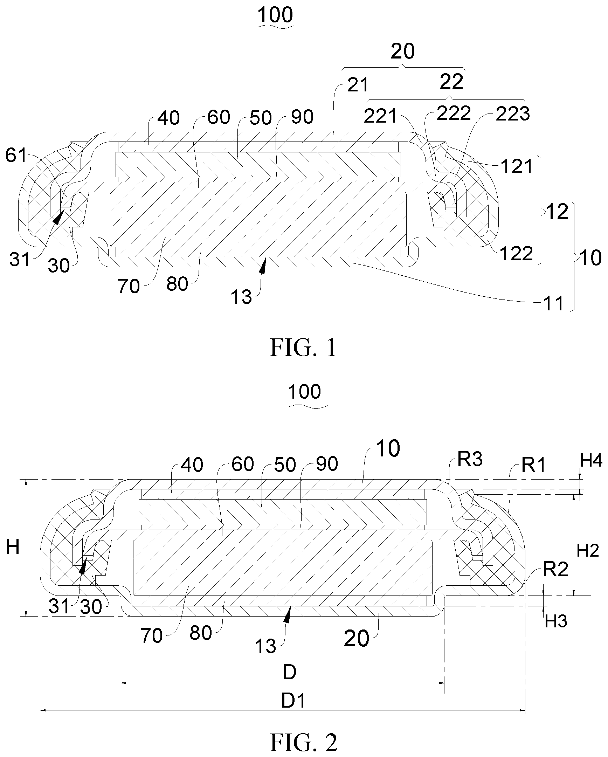

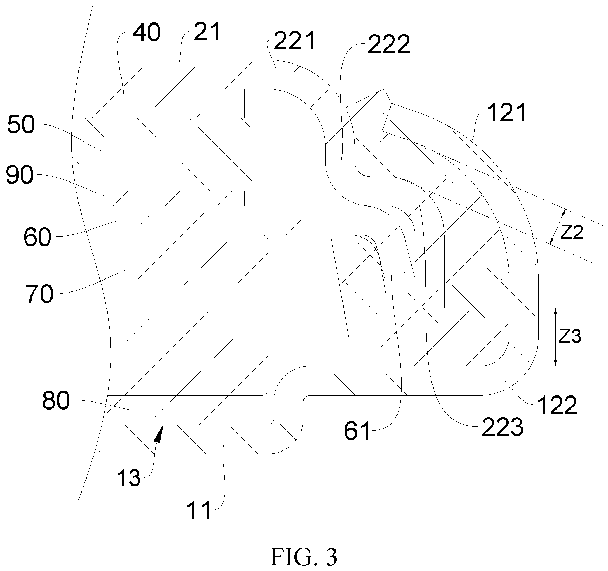

Referring to FIGS. 1 to 3, a button battery 100 according to embodiments of the present application includes a positive electrode case 10, a negative electrode case 20, and a sealing sleeve 30.

Referring to FIGS. 1 and 2, the positive electrode case 10 includes a support portion 11 and a corner portion 12 connected to the outside of the support portion 11. The corner portion 12 includes a first turning segment 121 and a second turning segment 122. The second turning segment 122 is connected between the support portion 11 and the first turning segment 121. A first curvature radius R1 of the first turning segment 121 ranges from 0.5mm to 0.85mm. A second curvature radius R2 of the second turning segment 122 ranges from 0.1mm to 0.5mm. The negative electrode case 20 includes a covering portion 21 and a bending snap-engage portion 22. The covering portion 21 and the support portion 11 are oppositely disposed. The bending snap-engage portion 22 has a third curvature radius R3. The third curvature radius R3 ranges from 0.1mm to 0.3mm. The first turning segment 121 and a region of the bending snap-engage portion 22 which has the third curvature radius R3 are oppositely disposed. A sealing sleeve 30 is sandwiched between the corner portion 12 and the bending snap-engage portion 22 to enable sealing between the positive electrode case 10 and the negative electrode case 20.

In the above button battery 100, the first curvature radius R1 of the first turning segment 121 and the second curvature radius R2 of the second turning segment 122 in the positive electrode case 10 are set to be in the ranges of 0.5-0.85mm and 0.1-0.5mm, respectively. And, the third curvature radius R3 of the bending snap-engage portion 22, which matches with the first turning segment 121, of the negative electrode case 20 is set to be in the range of 0.1-0.3mm. Further, the corner portion 12 and the bending snap-engage portion 22 are sealed by the sealing sleeve 30. In this way, after the assembly of the button battery 10 is completed, the bending snap-engage portion 22 of the negative electrode case 20 can be matched with the pressing forces of both the first turning segment 121 and the second turning segment 122, respectively, and the sealing sleeve 30 is pressed between the bending snap-engage portion 22 and the first turning segment 121, and between the bending snap-engage portion 22 and the second turning segment 122, thereby ensuring the sealability of the button battery 100 when being subjected to the high temperature in the later stage.

It can be understood that the larger the curvature, the larger the bending degree of the curve; the smaller the curvature, the smaller the bending degree of the curve. The inverse of the curvature is the curvature radius. Therefore, the smaller the curvature radius, the larger the bending degree of the curve; the larger the curvature radius, the smaller the bending degree of the curve.

Here, if the first curvature radius R1 of the positive electrode case 10 exceeds 0.85mm, the bending degree at the first turning segment 121 is small, resulting in insufficient pressing force, which affects the sealability among the positive electrode case 10, the sealing sleeve 30, and the negative electrode case 20. And, a height of the positive electrode case 10 is easily changed, resulting in poor contact of the components inside the button battery. So, the internal resistance of the button battery after long-term use is increased.

If the first curvature radius R1 of the positive electrode case 10 is less than 0.5mm, the bending degree at the first turning segment 121 is large. That is, the pressing force on the sealing sleeve 30 is large, which may cause the sealing sleeve 30 to be fractured, thereby affecting the sealability of the button battery.

The second turning segment 122 is connected to the support portion 11, which is equivalent that the end portions of the support portion 11 need to be deformed to be bent towards the negative electrode case 20, so as to form snap-engage portions by bending from the straight state, thereby snap-engage with the negative electrode case 20. Therefore, in order to ensure the magnitude of the snap-engage force, that is, to ensure the tightness, the curvature radius of the first turning segment 121 is set to be larger than the curvature radius of the second turning segment 122. That is, the bending degree of the first turning segment 121 is smaller than the bending degree of the second turning segment 122, so that not only the bending deformation of the positive electrode case 10 is realized, but also the snap-engagement of the first turning segment 121 with the bending snap-engage section 22 is realized.

Since the negative electrode case 20 also needs to be bent and formed into the bending snap-engage portion 22 from the original straight state, the value of the third curvature radius R3 of the bending snap-engage portion 22 is also small. That is, the negative electrode case 20 is bent greatly, and the third curvature radius R3 and the first turning segment 121 are formed to cooperate with each other to press against the sealing sleeve 30.

In this embodiment, the materials of the positive electrode case 10 and the negative electrode case 20 may be stainless steel, and the materials may be one of SUS430, SUS304, SUS316, and the like. The thicknesses H4 of the positive electrode case 10 and the negative electrode case 20 range from 0.1mm to 0.2mm, thereby ensuring structural strength and avoiding a larger thickness of the battery after the battery is manufactured.

When the button battery 100 is normally used, the button battery 100 further includes a negative current collector 40, a negative electrode 50, a separator 60, a positive electrode 70, and a positive electrode current collector 80 stacked in sequence from the covering portion 21 to the support portion 11; and an electrolyte filled between the positive electrode case 10 and the negative electrode case 20. The negative electrode 50 and the positive electrode 70 are separated by the separator 60. By providing the separator 60, it can prevent the positive electrode 70 and the negative electrode 50 from being connected and short-circuited during use. By disposing the negative electrode current collector 40 and the positive electrode current collector 80, the conductivity of both the negative electrode 50 and the positive electrode 70 during the charge and discharge process is improved, and the internal resistance during the charge and discharge process is reduced.

The positive electrode 70 includes a positive electrode foil; and a positive electrode active material, a positive electrode conductive agent, and a positive electrode adhesive that are coated on the positive electrode foil. The positive electrode active material may be a material such as lithium manganese oxide, lithium manganate, lithium nickel manganate, lithium-rich manganese base, and lithium manganese iron phosphate. The mass of the positive electrode active material accounts for 80-95% of the total mass of all coating materials. The positive electrode conductive agent is mainly selected from graphite, acetylene black, conductive carbon black, graphite, and the like. The ratio of the mass of the positive electrode conductive agent to the total mass of the coated material is 3-15%. The positive electrode adhesive includes a conventional positive electrode adhesive for a lithium battery such as polytetrafluoroethylene (PTEF) and vinylidene fluoride (PVDF). The ratio of the mass of the positive electrode adhesive to the total mass of all coating materials is 2%-15%.

The negative electrode 50 includes a negative electrode foil; and a negative electrode active material, a conductive agent, and an adhesive coated on the negative electrode foil. The negative electrode active material may be a material such as silicon, silicon oxide, or silicon carbon. The ratio of the mass of the negative electrode active material to the total mass of the coated material is 30-85%. The main components of the negative electrode conductive agent are graphite, acetylene black, conductive carbon black, and graphite. The ratio of the mass of the negative electrode conductive agent to the total mass of all coating materials is 10-50%. The negative electrode adhesive includes materials such as polytetrafluoroethylene (PTFE), styrene-butadiene rubber (SBR), polyacrylic acid (PAA), and polyacrylate (LA). The proportion of the mass of the negative electrode adhesive in the total mass of all coating materials is 2-15%.

Among them, the negative electrode current collector 40 and the positive electrode current collector 80 each include a conductive slurry filled with graphite or acetylene black, and a dispersant such as polyacrylates (LA), polyacrylic acid, polyamide imide (PAI), and the like.

The separator 60 may be one of a ceramic separator, a cellulose separator, a glass fiber, a polyetheretherketone (PEEK) resin, a polyester (PET) film, a polyimide (PI), and a polyamide (PA). In some embodiments, since glass fibers in polyimide (PI), polyamide (PA) have better high temperature resistance and have a long charging cycle life, the polyimide and the polyamide may be preferentially used.

The sealing sleeve 30 may be made of a polyetheretherketone (PEEK) resin, a polyphenylene sulfide (PPS) resin, a polyamide (PA) resin, or the like. The polyetheretherketone (PEEK) resin, the polyphenylene sulfide (PPS) resin, and the polyamide (PA) resin all have a high thermoplastic property; and have a good compression property when subjected to a pressing force between the positive electrode case 10 and the negative electrode case 20. So, it can avoid to occur the breakage due to pressing, thereby ensuring the sealing property of the battery after the high temperature. It may be used by selecting from one of the PEEK resin, the PPS resin, and the PA resin.

The electrolyte includes a lithium salt and an organic solvent. The lithium salt may be at least one of lithium hexafluorophosphate (LiPF₆), lithium perchlorate (LiClO₄), lithium bisfluorosulfonimide (LiFSI), lithium bis-trimesimide (LiTFSI), lithium tetrafluoroborate (LiBF₄). The solvent may be at least one of propylene carbonate (PC), vinyl carbonate (EC), dimethyl carbonate (DMC), methyl ethyl carbonate (EMC), diethyl carbonate (DEC), and ethylene glycol dimethyl ether (DME). The lithium salt concentration ranges from 1mol/L to 1.5mol/L.

Referring to FIG. 1, in embodiments of the present application, since the negative electrode conductive material is worse than the positive electrode conductive material in the negative electrode system, in order to ensure the charge-discharge stability of the negative electrode side, the button battery 100 further includes a negative electrode conductive layer 90 provided between the negative electrode 50 and the separator 60. The negative electrode conductive layer 90 is provided to increase the performance of the negative electrode 50 in the charge-discharge process, so as to avoid affecting the ion migration efficiency caused by the increase of the impedance of the battery after being long-term used. The material of the negative conductive layer may be a material such as graphite or acetylene black. It will be appreciated that the positive electrode side may also be added with a positive electrode conductive layer to increase the charge-discharge performance of the battery, which is not limited herein.

When the separator 60 is provided, the sealing sleeve 30 includes a clamping groove 31. The free end portion of the separator 60 is a bending segment 61. The bending segment 61 is clamped in the clamping groove 31. In this way, by providing the clamping groove 31 in the sealing sleeve 30, the arrangement position of the separator 60 can be defined, so that the separator 60 is prevented from being displaced. So, the positive electrode 70 and the negative electrode 50 are separated by the separator 60, and thus a short circuit between the positive electrode 70 and the negative electrode 50 is avoided.

Referring to FIGS. 1 to 3, the bending snap-engage portion 22 includes a third turning segment 221, a fourth turning segment 222, and a fifth turning segment 223, which are sequentially connected. The third turning segment 221 is connected to the covering portion 21 and has a third curvature radius R3. The fourth turning segment 222 is bent toward the separator 60. The fifth turning segment 223 is bent away from the separator 60. The distance Z2 between the fifth turning segment 223 and the first turning segment 121 is in the range of 0.15-0.4mm. The distance Z3 between the tip end of the fifth turning segment 223 and the inner wall of the support portion 11 is in the range of 0.15-0.4mm. That is, the sealing sleeve 30 is sandwiched between the negative electrode case 20 and the positive electrode case 10, and is in a compressed state. By matching the values of the distances Z3 and Z2, it is ensured that the sealing sleeve 30 is in a sufficient amount of compression between the positive electrode case 10 and the negative electrode case 20. So, it can avoid a condition in which liquid leakage is caused when the compression amount of the sealing sleeve 30 is insufficient, and it also can avoid a condition in which the negative electrode case 20 is pressed and deformed during the battery is installed when the compression amount of the sealing sleeve 30 is too large.

The value of the distance Z2 and the value of the distance Z3 may be set to be the same or different from each other.

Referring to FIG. 1 to FIG. 3, in one embodiment of the present invention, in order to facilitate the placement of the material on the positive electrode side, the support portion 11 is provided with a placement groove 13, and the positive electrode current collector 80 is provided in the placement groove 13. The button battery is installed in an inverted manner. That is, the negative electrode case 20 is inverted on the support surface, and the negative electrode current collector 40, the negative electrode 50, the negative electrode conductive layer 90, the separator 60, the positive electrode 70, and the positive electrode current collector 80 are sequentially provided; and then the sealing sleeve 30 covers on the negative electrode case 20 and the separator 60; and finally the positive electrode case 10 is enabled to cover. In this way, the positive electrode case 10 is provided with the placement groove 13, so that the positive electrode 70 can be quickly positioned at the installation position of the positive electrode case 10, thereby improving installation efficiency.

In some embodiments, the placement groove 13 is formed by projecting a part of the support portion 11 in a direction away from the covering portion 21. That is, when the placement groove 13 is to be formed, the positive electrode case 10 may be bent by an external force so that the placement groove 13 is formed after a part of the positive electrode case 10 is deformed. In this way, not only the arrangement of the placement groove 13 is facilitated, but also the structural strength of the positive electrode case 10 is ensured. In other embodiments, the body of the positive electrode case 10 may be grooved to form the placement groove 13, and thus it can realize the arrangement for the placement groove 13.

In some embodiments, referring to FIG. 2, when the placement groove 13 is to be formed, the width D1 of the placement groove 13 is 75-85% of the width D of the battery. By this numerical setting, a sufficient width of the electrode piece and the current collector can be provided, so that the power supply is ensured, and it also prevents the installation space from wasting, and prevents the power supply of the battery from being insufficient when the width is set too small. Further, it can avoid being inconvenient to assemble in the use of equipment when the width ratio is set too large.

The width D of the button battery of the present embodiment is within the range of 4-12mm. For example, when the width D of the button battery is set to 4 mm, the width D1 of the placement groove 13 is 80% of the width D of the battery, and the value of the width D1 is obtained by 4mm*80%=3.2mm.

Referring to FIG. 2, when the placement groove 13 is provided, the height H3 of the placement groove 13 is in the range of 0.1-0.3mm. By setting the height of the placement groove 13, the change of the height of the battery in the charging and discharging process of the button battery can be alleviated, and an expansion space can be provided for the button battery at a higher temperature and during the charging and discharging process. With this range setting, it can avoid that when the height setting is small, the moving range of the inner electrode piece is small. With this range setting, it can also avoid that when the height setting is large, the compression degree between the inner structures is not enough, and the inner resistance becomes large. In this case, it can prevent the contact between the inner structures of the battery being poor during the charging and discharging process to affect the charging and discharging performance.

In some embodiments, referring to FIG. 2, the height of the button battery 100 is denoted by H, the distance between the first turning segment 121 and the bottom of the support portion 11 is denoted by H2, and a sum of the distance H2 and the height H3 is denoted by H2+H3, and the value range of the sum H2+H3 satisfies 80%-90% of the height H. By this height setting, the second turning segment 122 has an extension length sufficient to be able to be pressed against the outside of the sealing sleeve 30, so as to ensure the compression degree of the sealing sleeve 30. At the same time, a larger amount of the sealing sleeves 30 can be provided to achieve the sealing effect.

In some embodiments, the height H of the button battery 100 of the present embodiment is in the range of 1-5mm. For example, in some embodiments, the height H of the button battery satisfies H=5mm, the distance H2 satisfies H2=4mm, the height satisfies H3=0.3mm, the sum of the distance H2 and the height H3 satisfies H2+H3=4.3mm, so that by (H2+H3)/H*100%=86%, the result (that is 86%) is in the range of 80%-90%, thus the requirement is satisfied.

The above-mentioned battery is manufactured as follows.

At step (1), preparing a positive electrode case 10 and a negative electrode case 20.

At step (2), coating a layer of first conductive adhesive and a layer of second conductive adhesive to the inner surface of the positive electrode case 10 and the negative electrode case 20, respectively; and drying the first conductive adhesive and the second conductive adhesive, where the dried first conductive adhesive and the dried second conductive adhesive form a positive electrode current collector 80 or a negative electrode current collector 40, respectively.

At step (3), coating a third conductive adhesive to a side of the negative electrode 50, and drying the third conductive adhesive, where the dried third conductive adhesive is the negative electrode current collector 40;

At step (4), inverting the negative electrode case 20, and placing the negative electrode 50 and the separator 60 sequentially in the negative electrode case 20, where the separator 60 is opposite to a side of the negative electrode 50 which is provided with the negative electrode current collector 40.

At step (5), covering a sealing sleeve 30 on the negative electrode case 20 and the separator 60.

At step (6), placing a positive electrode 70 on the separator 60.

At step (7), covering the positive electrode case 10 outside the negative electrode case 20 and the sealing sleeve 30, and applying a pressing force to the positive electrode case 10, so as to complete the assembly of the entire button battery.

Thus, by setting the parameters of the first curvature radius R1, the second curvature radius R2, the third curvature radius R3 of the negative electrode case 20, and the thicknesses of Z2 and Z3 of the sealing sleeve 30, the button battery 100 of the present embodiment can be well sealed after a high-temperature test. So, the liquid leakage of the button battery 100 can be prevented, and it can avoid the situation in which the external moisture enters the battery interior to deteriorate the performance of the battery, thereby improving the service life of the battery.

In the above-mentioned button battery 100, the first turning segment 121 and the second turning segment 122 of the positive electrode case 10 have curvature radiuses that respectively are in a range of 0.5-0.85mm and a range of 0.1-0.5mm; and the third curvature radius R3 of the negative electrode case 20 is in a range of 0.1-0.3mm. In this way, when the button battery 100 is assembled, the bending snap-engage portion 22 of the negative electrode case 20 can be matched with the pressing forces of both the first turning segment 121 and the second turning segment 122, respectively, so that the sealing sleeve 30 is pressed tightly between the bending snap-engage portion 22 and the first turning segment 121, and between the bending snap-engage portion 22 and the second turning segment 122. So, it can ensure the sealability of the button battery 100 when subjected to the high temperature at a later stage. By providing the negative electrode conductive layer 90 between the negative electrode 50 and the separator 60, the conductivity on the negative electrode side is ensured, and the impedance generated after long-term use of the button battery is resisted. By setting the height ranges of the two positions of the sealing sleeve 30 in the range of 0.15-0.4mm, the amount of compression of the sealing sleeve 30 is ensured, thereby ensuring the sealability. By providing the placement groove 13 in the positive electrode case 10, the positioning of the placement position of the positive electrode 70 is facilitated during assembly, and installation efficiency is improved. By setting the range of the overall height H2+H3 of the positive electrode case 10 to satisfy 80%H-90%H of the entire battery height H, the second turning segment 122 has a sufficient extension length to be pressed outside the sealing sleeve 30, thereby ensuring the compression degree of the sealing sleeve 30. At the same time, a large amount of the sealing sleeves 30 can be provided, thereby achieving the sealing effect.

Thus, in the above-mentioned ranges, even after the high-temperature test, the battery has a good sealability. That is, it is possible to prevent the electrolyte from leaking, volatilizing, or the external water gas from entering the inside of the battery to deteriorate the performance of the battery.

### Example 2

In the present embodiments, there is provided a button battery 100 manufactured by using the above-described parameters and manufacturing methods that are specifically as follows.
(1) The diameter D of the button battery 100 is 6.8mm. The height H is 2.1mm. The distance H2 is 1.5 mm. The height H3 is 0.2 mm. The first curvature radius R1 is 0.75mm. The compression amount Z2 of the sealing sleeve 30 between the first turning segment 121 and the fifth turning segment 223 is 0.35mm. The compression amount Z3 of the sealing sleeve 30 between the end portion of the negative electrode case 20 and the support portion 11 of the positive electrode case 10 is 0.3 mm.
(2) In the positive electrode 70, lithium manganate is used as a positive electrode active material, graphite is used as a positive electrode conductive agent, and polyacrylic acid is used as a positive electrode adhesive, and the lithium manganate, the graphite and the polyacrylic acid are mixed in a proportion of 90:8:2 by weight. The 95.3 milligram (mg) of mixed powder is pressed into a circular sheet having a diameter of 3.8mm, and the circular sheet is used as the positive electrode 70 to perform subsequent battery assembly.
(3) In the negative electrode 50, silicon oxygen is used as the negative electrode active material, graphite is used as the negative electrode conductive agent, and polyacrylic acid is used as the negative electrode adhesive. The silicon oxygen, the graphite, and the polyacrylic acid are mixed in a ratio of 70:28:2 by weight. The 5.1mg of mixed powder is pressed into a circular sheet having a diameter of 3.8mm, and the circular sheet is used as the negative electrode 50 to perform subsequent battery assembly.
(4) The electrolyte is 1 mol/L of Lithium Bis(fluorosulfonyl)imide (LiFSI), and the solvent is a mixture of propylene carbonate (PC), Ethylene carbonate (EC) and ethylene glycol dimethyl ether (DME) in a ratio of 1:1:2 by weight.
(5) The separator 60 is made of polyimide (PI) and the sealing sleeve 30 is made of polyphenylene sulfide (PPS) resin.

### Comparative Example 1

In Comparative Example 1, there is provided a button battery 100 manufactured according to the above manufacturing method. However, the partial parameters of the positive electrode case 10 or the negative electrode case 20 are different from those in Example 2.
(1) The diameter D of the button battery 100 is 6.8mm. The height H is 2.1mm. The distance H2 is 1.5 mm. The height H3 is 0.2 mm. The first curvature radius R1 is 0.5 mm (less than the first curvature radius R1 of Example 2). The second curvature radius R2 is 0.75mm. The compression amount Z2 of the sealing sleeve 30 between the first turning segment 121 and the fifth turning segment 223 is 0.3 mm (less than the compression amount Z2 of Example 2). The compression amount Z3 of the sealing sleeve 30 between the end of the negative electrode case 20 and the support portion 11 of the positive electrode case 10 is 0.25 mm (less than the compression amount Z3 of Example 2).
(2) In the positive electrode 70, lithium manganate is used as a positive electrode active material, graphite is used as a positive electrode conductive agent, and polyacrylic acid is used as a positive electrode adhesive. The lithium manganate, the graphite, and the polyacrylic acid are mixed in a ratio of 90:8:2 by weight. The 95.3mg of mixed powder is pressed into a circular sheet having a diameter of 3.8mm. The circular sheet is used as the positive electrode 70 to perform the assembly of the battery.
(3) In the negative electrode 50, silicon oxygen is used as the negative electrode active material, graphite is used as the negative electrode conductive agent, and polyacrylic acid is used as the negative electrode adhesive. The silicon oxygen, the graphite and the polyacrylic acid are mixed in a ratio of 70:28:2 by weight. The 5.1mg of mixed powder is pressed into a circular sheet having a diameter of 3.8mm. The circular sheet is used as the negative electrode 50 to perform the subsequent assembly of the battery.
(4) The electrolyte is 1 mol/L of Lithium Bis(fluorosulfonyl)imide (LiFSI), and the solvent is a mixture of propylene carbonate (PC), Ethylene carbonate (EC), and ethylene glycol dimethyl ether (DME) in a ratio of 1:1:2 by weight.

### Comparative Example 2

In Comparative Example 2, there is provided a button battery 100 manufactured according to the above manufacturing method. However, the partial parameters of the positive electrode case 10 or the negative electrode case 20 are different from those in Example 2. The difference is as follows.
(1) The diameter D of the button battery is 6.8mm. The height H is 2.1mm. The distance H2 is 1.7mm (larger than the distance H2 in Example 2). The height H3 is 0.2 mm. The first curvature radius R1 is 0.85mm (larger than the first curvature radius R1 in Example 1). The compression amount Z2 of the sealing sleeve 30 between the first turning segment 121 and the fifth turning segment 223 is 0.35mm. The compression amount Z3 of the sealing sleeve 30 between the end portion of the negative electrode case 20 and the support portion 11 of the positive electrode case 10 is 0.3 mm.
(2) In the positive electrode 70, lithium manganate is used as the positive electrode active material, graphite is used as the positive electrode conductive agent, and polyacrylic acid is used as the positive electrode adhesive. The lithium manganate, the graphite, and the polyacrylic acid are mixed in a ratio of 90:8:2 by weight. The 95.3mg of mixed powder is pressed into a circular sheet having a diameter of 3.8mm. The circular sheet is used as the positive electrode 70 to perform the subsequent assembly of the battery.
(3) In the negative electrode 50, silicon oxygen is used as the negative electrode active material, graphite is used as the negative electrode conductive agent, and polyacrylic acid is used as the negative electrode adhesive. The silicon oxygen, the graphite and the polyacrylic acid are mixed in a ratio of 70:28:2 by weight. The 5.1mg of mixed powder is pressed into a circular sheet having a diameter of 3.8mm. The circular sheet is used as the negative electrode 50 to perform subsequent assembly of the battery.
(4) The electrolyte is 1 mol/L Lithium Bis(fluorosulfonyl)imide (LiFSI), and the solvent is a mixture of propylene carbonate (PC), Ethylene carbonate (EC) and ethylene glycol dimethyl ether (DME) in a ratio of 1:1:2 by weight.
(5) The separator 60 is made of polyimide (PI) and the sealing material is made of polyphenylene sulfide (PPS) resin.

Further, the button batteries 100 manufactured in Example 2, Comparative Example 1, and Comparative Example 2 are tested at the following same temperature and in the following same charge/discharge test mode.
(1) The button battery 100 is discharged in a normal temperature environment so that the capacitance is the initial capacity Q0, and the height H and the internal resistance of the button battery 100 are recorded.
(2) After the button battery 100 is subjected to the temperature of the reflow soldering process, the height H and an internal resistance of the button battery 100 are tested. The discharge capacity of the button battery 100 after the reflow soldering process is denoted as a capacity Q. The conditions of the reflow soldering process are as follows. The button battery 100 is held at 160°C for 10 minutes and then at 260°C for 30 seconds.
(4) The capacity retention rate of the button battery 100 is calculated. The capacity retention rate is denoted by Q/Q0×100%, where Q denotes discharge capacity after reflow soldering, and Q0 denotes initial capacity.
(5) After the reflow soldering test of the button battery 100, the surface of the button battery 100 was observed to see whether there was liquid leakage, and the height H and the internal resistance of the button battery 100 before the reflow soldering of the button battery 100 were compared with the height H and the internal resistance of the button battery 100 after the reflow soldering of the button battery 100. The height variation amount is equal to the initial height H of the button battery 100 divided by the height H of the button battery 100 after the reflow soldering.

A capacity retention rate of 90% or more can be considered that there is no significant change in battery performance. The variation amount of the internal resistance is acceptable within 50Ω. The variation amount of the height H of the button battery 100 is within 0.02mm, which is considered as being within a standard range.

The parameters of the button battery 100 manufactured in Example 2, Comparative Example 1 and Comparative Example 2 are compared as follows.

| | Normal Temperature | After reflow soldering process | | | |
|---|---|---|---|---|---|
| | Internal Resistance (Ω) | Internal resistance(Ω) | Height variation amount (mm) | Capacity retention rate (%) | Whether there is liquid exudation |
| Example 2 | 408 | 420 | 0.01 | 93% | No |
| Comparative Example 1 | 423 | 500 | 0.05 | 70% | Yes |
| Comparative Example 2 | 420 | 482 | 0.02 | 82% | No |

(1) The values of the parameters H2, R1, R2, R3, Z2, and Z3 of the button battery 100 in the Example 2 are within the optimal range listed in the Example 1. The internal resistance change of the battery is slightly small (Δ=420-408=12Ω) before and after reflow soldering, and the button battery 100 is represented no significant liquid leakage. This indicates that the button battery 100 still has better sealability after high-temperature treatment, and the capacity retention rate of the button battery 100 is 90% or more, which can meet the capacity requirement of the button battery 100.
(2) In comparison with Example 2, the distance H2 of Comparative Example 1 is lower than the preferred range. That is, the bending extension length for sealing of the positive electrode case 10 is not enough. And, the first curvature radius R1 is 0.5 mm and is smaller than first curvature radius R1 of Example 2, whereas the value (that is 0.5mm) is within the preferred range. After the reflow soldering process, a liquid appears on the surface of the button battery 100. Therefore, the reason for appearing the liquid may be that the pressing force of the first turning segment 121 of the positive electrode case 10 is excessively large during the sealing process of the button battery 100, and the sealing sleeve 30 may be fractured, thereby affecting the thermoplasticity of the sealing sleeve 30. So, it can cause the leakage of the electrolyte inside of the button battery 100 or entry of external water into the button battery 100, thereby resulting in an increase in the internal resistance of the button battery 100 and a decrease in the capacity retention rate.
(3) In Comparative Example 2, in the button battery 100, the distance between the end portion of the first turning segment 121 and the outer wall of the support portion 21 is beyond the preferable range. When the second curvature radius R2 is 0.75mm and is greater than the preferable value (i.e., 0.5) of the second curvature radius R2, there is no significant liquid leakage from the surface of the button battery 100. However, the internal resistance variation is relatively large, which results from the poor contact in the interior of the button battery 100 due to an increase in the distance H2. Further, an increase in the internal resistance of the battery also causes the capacity retention rate of the battery to be lower than 90%.

In conclusion, the test results of Example 2, Comparative Example 1 and Comparative Example 2 show that: the button battery 100 prepared in the present application according to the parameters of the first curvature radius R1, the second curvature radius R2, the third curvature radius R3 of the negative electrode case 20, and Z2 and Z3 of the sealing sleeve 30 have good sealing performance after the high-temperature environment. In this way, liquid leakage can be avoided, and the electrical performance of the button battery 100 is not significantly degraded, thereby ensuring the service performance of the button battery 100.

## Claims

1. A button battery (100) comprising:
a positive electrode case (10) comprising a support portion (11) and a corner portion (12) connected to an outer side of the support portion (11), wherein the corner portion (12) comprises a first turning segment (121) and a second turning segment (122), the second turning segment (122) is connected between the support portion (11) and the first turning segment (121), a first curvature radius R1 of the first turning segment (121) ranges from 0.5mm to 0.85mm, and a second curvature radius R2 of the second turning segment (122) ranges from 0.1mm to 0.5mm;
a negative electrode case (20) comprising a covering portion (21) and a bending snap-engage portion (22), wherein the covering portion (21) and the support portion (11) are disposed oppositely, the bending snap-engage portion (22) have a third curvature radius R3 ranging from 0.1mm to 0.3mm, and the first turning segment (121) and a region of the bending snap-engage portion (22) having the third curvature radius R3 are disposed opposite each other; and
a sealing sleeve (30) sandwiched between the corner portion (12) and the bending snap-engage portion (22), so as to enable sealing between the positive electrode case (10) and the negative electrode case (20).

2. The button battery (100) according to claim 1, wherein the button battery (100) further comprises a negative electrode current collector (40), a negative electrode (50), a separator (60), a positive electrode (70), and a positive electrode current collector (80) stacked in sequence from the covering portion (21) to the support portion (11), and the negative electrode (50) and the positive electrode (70) are separated by the separator (60).

3. The button battery (100) according to claim 2, wherein the button battery (100) further comprises a negative conductive layer (90) provided between the negative electrode (50) and the separator (60).

4. The button battery (100) according to claim 2 or 3, wherein the sealing sleeve (30) comprises a clamping groove (31), the separator (60) comprises a free end portion that is a bending segment, and the bending segment is clamped in the clamping groove (31).

5. The button battery according to claim 4, wherein
the bending snap-engage portion (22) includes a third turning segment (221), a fourth turning segment (222), and a fifth turning segment (223) connected in sequence, the third turning segment (221) is connected to the covering portion (21) and has the third curvature radius R3, the fourth turning segment (222) is bent towards the separator (60), and the fifth turning segment (223) is bent in a direction away from the separator (60);
wherein a distance Z2 between the fifth turning segment (223) and the first turning segment (121) ranges from 0.15mm to 0.3mm;
a distance Z3 between a tip end of the fifth turning segment (223) and an inner wall of the support portion (11) ranges from 0.15mm to 0.4mm.

6. The button battery (100) according to claim 2 or 3, wherein the support portion (11) is provided with a placement groove (13) in which the positive electrode current collector (80) is arranged.

7. The button battery (100) according to claim 6, wherein the placement groove (13) is formed by projecting a part of the support portion (11) in a direction away from the covering portion (21).

8. The button battery (100) according to claim 6, wherein a width D1 of the placement groove (13) is 75%-85% of a width D of the button battery.

9. The button battery (100) according to claim 7 or 8, wherein a height H3 of the placement groove (13) ranges from 0.1mm to 0.3mm.

10. The button battery (100) according to claim 9, wherein a height of the button battery (100) is denoted by H, a distance between the first turning segment (121) and a bottom of the support portion is denoted by H2; and a sum of the distance between the first turning segment and the bottom and the height of the placement groove is denoted by H2+H3, and ranges from 80%-90% of the height H.
